# EUROPÄISCHE PATENTANMELDUNG

(11) **EP 2 604 549 A1**
(43) Veröffentlichungstag der Anmeldung: **19.06.2013**
(21) Anmeldenummer: 12008012.2
(22) Anmeldetag: 29.11.2012
(51) Int. Cl.: B65G 1/02

(54) **Stollenlager**

(30) Priorität: 14.12.2011 DE 202011109061 U
(71) Anmelder: Fritz Schäfer GmbH, 57290 Neunkirchen (DE)
(72) Erfinder:
(74) Vertreter: Kross, Ulrich

(57) **Zusammenfassung**

Ein Stollenlager mit mehreren Regalebenen und in einer oder mehreren Fahrgassen verfahrbaren Verteilfahrzeugen, wie ein automatisches Regalbediengerät, zur Ein- und Auslagerung von Lagergut in bzw. aus seitlich benachbart von Kommissionierplätzen vorgesehenen, Palettenstellplätze bereitstellenden Fächern, wobei der Zugang zu den Fächern bzw. Palettenstellplätzen durch Sicherungsvorrichtungen verschlossen werden kann, soll so weitergebildet werden, dass mit geringerem Aufwand gleichwohl einen deutlich verbesserten Schutz der in dem Lager kommissionierenden Personen geboten wird. Dazu wird vorgeschlagen, dass jeder Palettenstellplatz (6) sowohl an seiner der Fahrgasse (4) als auch an seiner den Kommissionierplätzen (5) zugewandten Seite (FGS bzw. KPS) mit einer in der Vertikalebene variabel höhenverstellbaren Zugangssperre (11a, 11 b) ausgebildet ist, wobei die Zugangssperren (11a, 11b) bewegungsabhängig miteinander gekoppelt sind.

## Beschreibung

### Stollenlager

Die Erfindung betrifft ein Stollenlager mit mehreren Regalebenen und in einer oder mehreren Fahrgassen verfahrbaren Verteilfahrzeugen, wie automatische Regalbediengeräte, zur Ein- und Auslagerung von Lagergut in bzw. aus seitlich benachbart von Kommissionierplätzen vorgesehenen, Palettenstellplätze bereitstellenden Fächern, wobei der Zugang zu den Fächern bzw. Palettenstellplätzen durch Sicherungsvorrichtungen verschlossen werden kann.

Ein Stollenlager mit einem in der Höhe verstellbaren Tor als Sicherungsvorrichtung ist durch die EP 0 648 707 B1 bekannt geworden. Das Tor ist an der dem Fahrweg zugewandten Seite des Regal über Führungsschienen an diesem geführt und schließt die Fächer der untersten Reihe des Regales gegenüber dem Fahrweg ab. Die Fächer sind von der dem Fahrweg gegenüberliegenden Seite des Regals von Personen zugänglich, die von Hand in den Fächern kommissionieren. Zur Entnahme des Lagergutes ist das Tor von einem an der Hubeinheit des Verteilfahrzeugs angeordneten Antrieb aus der Schließstellung in eine Offenstellung verfahrbar und wird von dem Antrieb in der Offenstellung gehalten.

Der Erfindung liegt die Aufgabe zugrunde, ein Stollenlager der eingangs genannten Art zu schaffen, das mit geringerem Aufwand gleichwohl einen deutlich verbesserten Schutz der in dem Lager kommissionierenden Personen bietet.

Diese Aufgabe wird erfindungsgemäß dadurch gelöst, dass jeder Palettenstellplatz sowohl an seiner der Fahrgasse als auch an seiner den Kommissionierplätzen zugewandten Seite mit einer in der Vertikalebene variabel höhenverstellbaren Zugangssperre ausgebildet ist, wobei die Zugangssperren bewegungsabhängig miteinander gekoppelt sind. Durch die Zugangssperren, in einfacher Weise vorteilhaft Gitterelemente, deren Höhenabmessung nur einem Bruchteil der Fachhöhe zu betragen braucht, wird sicher gewährleistet, dass einer kommissionierenden Person in jedem Fall der Fahrgassenschacht versperrt bleibt und die Person somit nicht in den Fahrgassenschacht fallen oder in diesen greifen kann.

Denn wenn der Palettenstellplatz nicht besetzt ist und neu mit einer beladenen Palette bestückt werden muss, befindet sich die Zugangssperre der Fahrgassenseite in einer nach oben angehobenen Position, womit das Regalbediengerät die Palette ungehindert in das Fach abstellen kann. Hingegen befindet sich die Zugangssperre an der gegenüberliegenden, den Kommissionierplätzen zugewandten Seite aufgrund der Bewegungsabhängigkeit in einer unteren Position, aber dennoch in einer solchen Höhe, dass die Person nicht in das Fach eintreten kann, was natürlich besonders wichtig ist, solange das Fach noch nicht bestückt ist. Sobald der Palettenstellplatz bzw. das Fach bestückt ist, kann der Kommissionierer die Zugangssperre zum Kommissionierplatz hin einfach von Hand, optional motorisch, nach oben verstellen, wobei sich die gegenüberliegende Zugangssperre der Fahrgassenseite entsprechend nach unten absenkt. Der Kommissionierer kann nun einzeln die Stückgüter von der Palette entnehmen, wobei er bei zunehmender Entladung auf die Palette treten muss, um die letzten, der Fahrgassenseite benachbarten Stückgüter zu erreichen. Da sich die dortige Zugangssperre in der unteren Position befindet, ist die Gefahr, dass der Kommissionierer von der Palette in den Fahrschacht fallen oder greifen und von einem Regalbediengerät verletzt werden kann, unterbunden.

Befindet sich auf der Palette kein Stückgut mehr, tritt der Kommissionierer aus dem Fach heraus und kann dann von der Kommissionierplatzseite her die Zugangssperre nach unten ziehen, womit sich gleichzeitig die Zugangssperre der Fahrgassenseite entsprechend nach oben verstellt. Das Regalbediengerät kann nun die leere Palette aus dem Fach entnehmen und dieses neu mit einer beladenen Palette bestücken. Während dieser Leerpalettenentnahme und Neubeladung ist das leere Fach bzw. der unbesetzte Palettenstellplatz für den Kommissionierer von der Kommissionierseite her stets versperrt.

Diese einfache Handhabung, ohne beispielsweise zusätzlich Lichtschranken und/oder elektrische Impulse vorsehen zu müssen, lässt sich nach einer bevorzugten Ausführung der Erfindung zu einer kostengünstigen, einfachen Schleusenlösung dadurch begünstigen, dass die Zugangssperren durch Seile, insbesondere Drahtseile, die über in den die Fächer eckseitig grenzenden Vertikalpfosten angeordneten Umlenkrollen laufen, miteinander verbunden sind.

Es liegt hierbei im Rahmen der Möglichkeiten, in der Seilverbindung Zugfedern oder dergleichen vorzusehen, um eine gewisse Schwergängigkeit, die jedoch von Hand leicht zu überwinden ist, beim Wechselspiel zur Einstellung der Zugangssperren zu erreichen.

Weitere Einzelheiten und Merkmale ergeben sich aus den Ansprüchen und der nachfolgenden Beschreibung eines in den Zeichnungen schematisch dargestellten Ausführungsbeispiels der Erfindung. Es zeigen:
- Fig. 1: in einer Vorderansicht ein als Stollenlager ausgebildetes Lagersystem mit Gassen für verfahrbare Regalbediengeräte an einer Seite von übereinander angeordneten Fächern zur Einlagerung von bestückten Paletten und an der anderen Seite in entsprechend den Fächern verschiedenen Höhenebenen vorgesehenen Kommissionierplätzen; und
- Fig. 2: als Einzelheit der Fig. 1 einen einzelnen Fachaufbau mit linksseitiger Fahrgasse und rechtsseitigen Kommissionierplätzen.

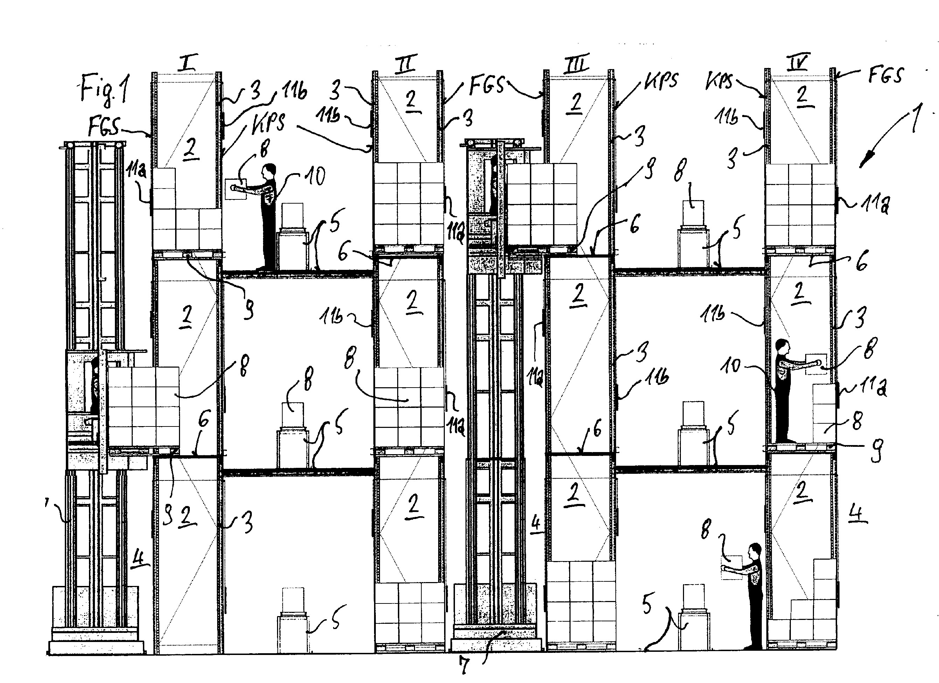

Ein in Fig. 1 dargestelltes Stollenlager 1 besteht aus vier Fachaufbauten I bis IV mit hier jeweils drei übereinander angeordneten Fächern 2. Die Fachaufbauten I bis IV bzw. deren Fächer 2 werden von vier eckseitig vorgesehenen Vertikalpfosten 3 begrenzt. Entlang der Fachaufbauten I bis IV sind an Fahrgassenseiten FGS Fahrgassen 4 und an den gegenüberliegenden Kommissionierplatzseiten KPS in den den Fächern 2 zugeordneten, unterschiedlichen Höhenebenen Kommissionierplätze 5 ausgebildet.

Die Fächer 2 stellen Palettenstellplätze 6 bereit, die von der Fahrgassenseite FGS durch die in den Fahrgassen 4 entlang der Fachaufbauten in der Zeichnungsebene nach vorne und nach hinten verfahrbaren Regalbediengeräte 7 mit die einzulagernden Stückgüter 8 beladenen Paletten 9 belegt werden. Von der Kommissionierplatzseite KPS her können die Stückgüter 8 sukzessive entnommen und auf den Kommissionierplätzen 5 gemäß einer aufgegebenen Kommission zusammengestellt werden.

Damit eine die Kommission auf dem Kommissionierplatz 5 zusammenstellende Person 10 davor geschützt ist, bei seiner Tätigkeit bzw. beim Entladen der Stückgüter 8 aus einem Fach 2 in den Schacht der Fahrgasse 4 fallen zu können, was natürlich vorrangig für die höher gelegenen Bedienebenen gilt, und zwar mit absoluter Sicherheit sowohl dann, wenn das Fach leer ist oder eine beladene Palette 9 neu eingelagert wird, wie auch bei sich leerender Palette, wozu die Person bzw. der Kommissionierer 10 die Palette 9 in dem Fach 2 betreten muss (vgl. in Fig. 1 im Fachaufbau IV das mittlere Fach), sind alle Fachaufbauten I bis IV einerseits an ihrer Fachgassenseite FGS und andererseits an ihrer Kommissionierplatzseite KPS mit einer Zugangssperre 11a bzw. 11 b ausgebildet, beispielsweise in Form von Gitterelementen.

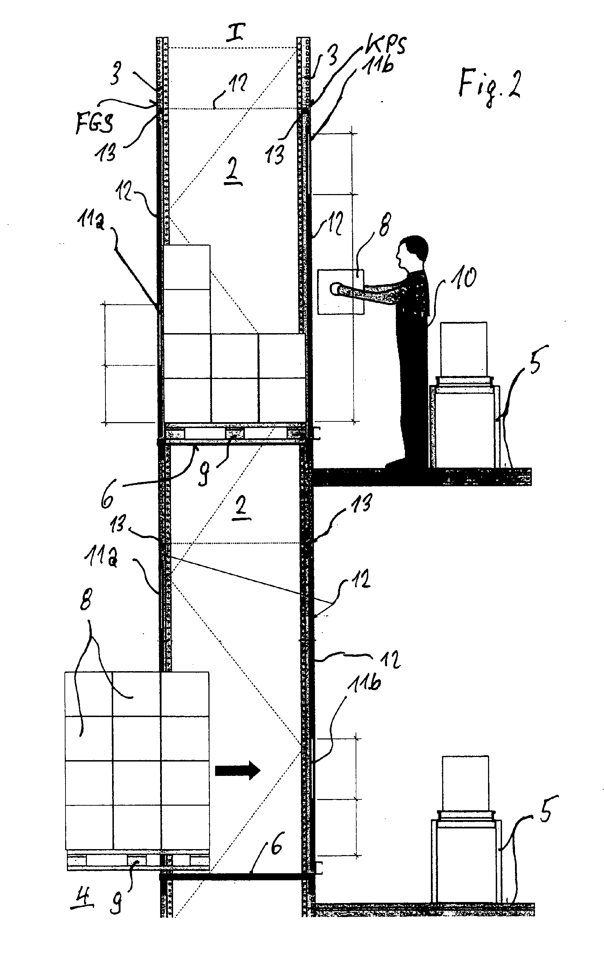

Wie sich näher der Fig. 2 entnehmen lässt, ist jeweils die Zugangssperre 11a der Fahrgassenseite FGS über ein Seil 12, insbesondere Drahtseil, das über in den Vertikalpfosten 3 angeordnete Umlenkrollen 13 läuft, bewegungsabhängig mit der Zugangssperre 11 b der Kommissionierplatzseite KPS verbunden bzw. gekoppelt. Damit lässt sich ein in jeder Bediensituation zuverlässiger Personenschutz durch das Wechselspiel aufgrund der Bewegungskopplung zwangsläufig unterschiedliche Höhenlagen einnehmenden Zugangssperren 11a, 11 b erreichen, deren Höhenabmessung bezogen auf die Fachhöhe nur sehr schmal zu sein braucht.

In der oberen Hälfte der Fig. 2 befindet sich die Zugangssperre 11 a in einer abgesenkten Position und die an der gegenüberliegenden Kommissionierplatzseite KPS befindliche Zugangssperre 11 b in einer oben liegenden Position, so dass die Person 10 freien Zugriff zum Stückgut hat und auch in das Fach auf die Palette 9 treten kann (vgl. Fig. 1 unter IV), wobei die Zugangssperre 11a der Fahrgassenseite FGS sich in einer solchen Höhe befindet, dass die das Fach 2 betretende Person 10 keinesfalls in den Schacht der Fahrgasse 4 fallen oder greifen kann. Umgekehrt ist es in der unteren Bildhälfte von Fig. 2, die das Beladen eines Faches 2 mit einer Palette 9 darstellt. Durch die sich dann an der Kommissionierplatzseite KPS in der abgesenkten Position befindende Zugangssperre 11 b kann die Person 10 weder bei leerem Fach 2 noch beim Abstellen der Palette 9 auf den Stellplatz 6 in das Fach treten und kann somit nicht in die Nähe des Schachts der Fahrgasse 4 gelangen.

### Bezugszeichenliste:

- 1: Stollenlager
- 2: Fach
- 3: Vertikalpfosten
- 4: Fahrgasse
- 5: Kommissionierplatz
- 6: Palettenstellplatz
- 7: Regalbediengerät
- 8: Stückgut
- 9: Palette
- 10: Person/Kommissionierer
- 11a, b: Zugangssperre (Gitterelement)
- 12: Seil (Drahtseil)
- 13: Umlenkrolle
- FGS: Fahrgassenseite
- KPS: Kommissionierplatzseite
- I bis IV: Fachaufbauten

## Patentansprüche

1. Stollenlager mit mehreren Regalebenen und in einer oder mehreren Fahrgassen verfahrbaren Verteilfahrzeugen, wie ein automatisches Regalbediengerät, zur Ein- und Auslagerung von Lagergut in bzw. aus seitlich benachbart von Kommissionierplätzen vorgesehenen, Palettenstellplätze bereitstellenden Fächern, wobei der Zugang zu den Fächern bzw. Palettenstellplätzen durch Sicherungsvorrichtungen verschlossen werden kann,
**dadurch gekennzeichnet,**
**dass** jeder Palettenstellplatz (6) sowohl an seiner der Fahrgasse (4) als auch an seiner den Kommissionierplätzen (5) zugewandten Seite (FGS bzw. KPS) mit einer in der Vertikalebene variabel höhenverstellbaren Zugangssperre (11a, 11b) ausgebildet ist, wobei die Zugangssperren (11a, 11 b) bewegungsabhängig miteinander gekoppelt sind.

2. Stollenlager nach Anspruch 1,
**gekennzeichnet durch**
Gitterelemente als Zugangssperren (11 a, 11 b).

3. Stollenlager nach Anspruch 1 oder 2,
**dadurch gekennzeichnet,**
**dass** die Zugangssperren (11a, 11b) durch Seile (12), die über in den die Fächer (2) eckseitig begrenzenden Vertikalpfosten (3) angeordneten Umlenkrollen (13) laufen, miteinander verbunden sind.

4. Stollenlager nach Anspruch 3,
**gekennzeichnet durch**
in der Seilverbindung vorgesehene Zugfedern.

5. Stollenlager nach einem der Ansprüche 1 bis 4,
**dadurch gekennzeichnet,**
**dass** die Zugangssperren (11a, 11b)manuell oder motorisch verstellbar sind.
